# EUROPÄISCHE PATENTSCHRIFT

(11) **EP 1 867 152 B1**
(45) Veröffentlichungstag und Bekanntmachung des Hinweises auf die Patenterteilung: **16.03.2016**
(21) Anmeldenummer: 06725338.5
(22) Anmeldetag: 28.03.2006
(51) Int. Cl.: H04N 5/76

(54) **ANORDNUNG UND VERFAHREN ZUM SPEICHERN UND WIEDERGEBEN VON TV-SENDUNGEN**
DEVICE AND METHOD FOR STORING AND PLAYING BACK TV TRANSMISSIONS
SYSTÈME ET PROCÉDÉ POUR STOCKER ET REPRODUIRE DES ÉMISSIONS TV

(30) Priorität: 30.03.2005 US 666392 P
(43) Veröffentlichungstag der Anmeldung: 19.12.2007
(73) Patentinhaber: Nokia Solutions and Networks GmbH & Co. KG, 81541 Munich (DE)
(72) Erfinder: JENZOWSKY, Stefan, 14167 Berlin (DE); SCHEUER, Axel, 80804 München (DE); STELZL, Rudolf, 85221 Dachau (DE); SCHWEICKHARDT, Harald, 81479 München (DE); HIELSCHER, Christoph, 81549 München (DE); COLES, Christopher B., Littleton, Colorado 80127 (US)
(74) Vertreter: Weidel, Gottfried
(86) Internationale Anmeldenummer: PCT/EP2006/061074
(87) Internationale Veröffentlichungsnummer: WO 2006/103218

(56) Entgegenhaltungen:
- WO-A1-2004/054259
- WO-A2-01/58158
- US-A1- 2002 174 433
- US-A1- 2003 208 763
- US-A1- 2004 078 829
- US-A1- 2004 228 605

## Beschreibung

Die vorliegende Erfindung betrifft ein Verfahren und eine Anordnung zum Speichern und Wiedergeben von TV-Sendungen. Insbesondere liefert die vorliegende Erfindung ein verbessertes Verfahren und eine verbesserte Anordnung für den Betrieb eines Netzwerk-PVR.

Nachdem bandbasierte analoge Videoaufzeichnungsgeräte über Jahrzehnte hinweg für Heimanwender die einzige Möglichkeit darstellten, über Antennen-, Kabel- oder Satellitenfernsehen ausgestrahlte Sendungen aufzuzeichnen und komfortabel aufzubewahren, gibt es nach dem Verfügbarwerden schneller und gleichzeitig preiswerter Videoprozessoren und leistungsfähiger Videocodecs wie etwa MPEG2 (1994) und MPEG4 (1998) seit einigen Jahren eine Reihe von meist festplattenbasierten digitalen Geräten, die neben der reinen Videoaufzeichnung eine Reihe von Komfortfunktionen bieten.

Diese neue Gerätegeneration wird häufig als persönlicher Videorekorder (PVR), mitunter auch als digitaler Videorecorder (DVR) bezeichnet. Während diese modernen Geräte natürlich auch wie klassische Geräte zum einfachen Aufzeichnen und späteren Wiedergeben von Sendungen genutzt werden können, gehen deren Fähigkeiten darüber bei weitem hinaus. Ein häufig genutztes Merkmal eines PVR ist beispielsweise das sogenannte zeitversetzte Fernsehen (Time Shifting), bei dem der Nutzer mit dem Wiedergeben einer Sendung bereits beginnt, während die Aufzeichnung noch läuft. Dank der leistungsfähigen Hardware eines modernen PVR ist die dabei erreichte Bildqualität besser als die eines herkömmlichen VHS oder SVHS Bandgeräts.

Das zeitversetzte Fernsehen erlaubt es dem Nutzer auch, eine zunächst live angesehene Sendung zu "pausieren", etwa um einen Anruf entgegenzunehmen, und die Wiedergabe später fortzusetzen, wobei es sich für den Nutzer so darstellt, als habe er tatsächlich die Live-Ausstrahlung pausiert und später fortgesetzt. Im Hintergrund hat jedoch der Druck des Nutzers auf die "Pause"-Taste seinen PVR veranlaßt, das laufende Programm aufzuzeichnen, und der erneute Druck auf die "Pause"-Taste führt dazu, daß die aufgezeichnete Sendung einerseits weiter aufgezeichnet und andererseits bereits wiedergegeben wird.

Großer Beliebtheit erfreut sich auch die Fähigkeit eines PVR, mit minimaler Verzögerung größere Abschnitte in einer Aufzeichnung überspringen zu können. Häufig wird dies benutzt, um in der Aufzeichnung enthaltene Werbeblöcke bei der Wiedergabe zu überspringen. Um diese Fähigkeit hat sich eine Reihe von Diensten etabliert, die das Auffinden der Grenzen der Werbeblöcke erleichtern, etwa indem der Beginn und das Ende eines Werbeblocks als auf den Beginn einer Sendung bezogene Zeitpunkte als Index zur Aufzeichnung abgelegt werden und somit bei der Wiedergabe ein automatisches Überspringen der Werbung möglich wird.

Neben speziell angepaßten Unterhaltungselektronikgeräten werden zunehmend auch multimedia-fähige PCs mit geeigneter Software als PVR genutzt (bekannt als Home Theater PC, HTPC). Technisch unterscheidet sich ein spezieller PVR von einem PC-PVR kaum; beide weisen einen großen (Platten-) Speicher auf, ausreichend Prozessorleistung und geeignete Videocodecs.

Beide Plattformvarianten sind durch konfigurierbare Software bzw. Firmware in der Lage, dem Nutzer weitere Funktionen zu bieten, etwa die Suche nach Sendungen, die thematisch zu seinen Lieblingssendungen passen. Beiden Plattformvarianten ist gemein, daß die Aufzeichnung lokal beim Nutzer erfolgt und die Menge aufzeichenbarer Sendungen durch den lokalen Plattenspeicher begrenzt ist. Häufig ist es deshalb möglich, aufgezeichnete Sendungen vom internen Speicher des Geräts auf beschreibbare Medien wie (wieder)beschreibbare CD oder DVD zu transferieren. Dies ist aber mit Aufwand verbunden, und nicht zuletzt ist auch der Preis eines PVR erheblich. Und auch PVR leiden unter dem Problem, daß zum parallelen Aufzeichnen mehrer Sendungen auch mehrere PVR benötigt werden. Teurere Multituner-Geräte lösen dieses Problem nur bedingt, da stets weniger Tuner als TV Stationen vorliegen werden und außerdem die - für einen Kanal ausreichend leistungsfähige - Hardware des PVR bei der parallelen Aufzeichnung mehrerer Kanäle an ihre Grenzen stößt.

Um Nutzern alle Vorteile eines PVR bieten zu können, ohne daß diese die Investition in einen PVR tätigen müssen, wurde in dem Whitepaper "Network PVR: Everything on Demand", Jay Schiller, nCube Corporation, erhältlich im Internet unter http://www.ncube.com/pressroom/downloads/nvpr-whitepaper.pdf ein Netzwerk-PVR vorgeschlagen, bei dem Speicher, Kodierlogik und Codecs durch einen Anbieter im Kabelnetz vorgehalten werden. Der Nutzer erhält ein Gerät, mit dem er Sendungen zur Speicherung auswählen und gespeicherte Sendungen abrufen kann, die dann mittels breitbandiger Verbindung in Echtzeit an den Nutzer übertragen werden. Ein solches Gerät kann im Vergleich zu einem PVR oder einem HTPC wesentlich weniger leistungsfähig sein. Gleichzeitig kann der Nutzer praktisch unbegrenzt Speicherplatz auf dem zentralen PVR-Server mieten, während der Betreiber des PVR-Servers nur eine Kopie jeder Sendung vorhalten muß, die dann bei Bedarf an jene Nutzer verteilt wird, die diese Sendung in ihrem (virtuellen) Speicher abgelegt haben.

In einer Fortbildung kann ein solcher Netzwerk-PVR so ausgestaltet sein, daß das "Programmieren" des Netzwerk-PVR durch den Nutzer entfällt und der Nutzer statt dessen auf alle Sendungen seines Programm-Bouquets etwa der letzten 4 Wochen Zugriff hat.

Die bereits erwähnte Möglichkeit für Nutzer eines PVR, in TV-Sendungen eingebettete Werbung automatisiert oder zumindest manuell komplett zu überspringen, führt dazu, daß dem klassischen, durch Werbung finanzierten Fernsehen seine Finanzierungsgrundlage entzogen wird.

US 2004/078829 A1 betrifft eine ortsfeste Anwendung und eine zweite Anwendung, welche in einer Settop-Box vorhanden sind, um einen TV-Rundfunk-Service bzw. einen Netzwerk-PVR (NPVR)-Service zu empfangen. Die ortsfeste Anwendung wird zugunsten der zweiten Anwendung suspendiert, wenn ein Nutzer von einem Rundfunkkanal zu einem Netzwerk-PVR-fähigen Kanal wechselt, und umgekehrt. In einer Ausgestaltung, bei welcher eine Digital-Videorekorder (DVR)-Settop-Box verwendet wird, stellt ein DVR-Server Trickfunktionen (Pause, Rücklauf und Vorlauf) bereit, bevor eine NPVR-Sitzung eingerichtet wird.

US 2004/228605 A1 betrifft verschiedene Verfahren und Vorrichtungen, um eine Effektivität von kommerziellen Sprungsystemen, welche in Videorekordern vorhanden sind, zu reduzieren oder zu beseitigen. Dazu wird das Videosignal modifiziert, um eine Erkennung von Werbeblöcken durch den Videorekorder zu erschweren oder zu verhindern. Gemäß D2 sei es bekannt eine Einheit zum automatischen Erkennen eines Übergangs eines Werbeblocks, eine Schaltung zum Erzeugen eines Klassifikationssignals und eine Einheit zum folgenden Verändern des Übergangs des Werbeblocks zusammen zu verwenden. Während die Einheit zum automatischen Erkennen des Übergangs des Werbeblocks alle Übergänge von Werbeblöcken erkennt und die Information darüber der Einheit zum folgenden Verändern des Übergangs des Werbeblocks bereitstellt, ersetzt die Einheit zum folgenden Verändern des Übergangs des Werbeblocks die Übergänge, so dass sie für kommerzielle Sprungsysteme nicht mehr erkennbar sind.

WO 01/58158 A2 betrifft Verfahren und Systeme für erzwungenes Werben, welche ermitteln, wann eine erzwungene Werbung gezeigt werden sollte und welche erzwungene Werbung gezeigt werden sollte, und welche steuern, wie die erzwungene Werbung gezeigt werden sollte. Die erzwungene Werbung kann vor der Zeit, zu der sie gezeigt werden sollte, empfangen werden, oder bei Bedarf. Die erzwungene Werbung kann gezeigt werden, wenn gewisse Broadcast Werbungen ausgestrahlt werden, zu gewissen Tageszeiten oder an gewissen Zeitpunkten in einem Programm. Die erzwungene Werbung kann ausgewählt werden basierend auf dem Inhalt einer ersetzten Broadcast Werbung, basierend auf dem Inhalt eines benachbarten Programms, oder unabhängig von jeden Broadcast-bezogenen Faktoren. Erzwungene Werbungen können derart gezeigt werden, dass der Fernsehzuschauer dem Ansehen der erzwungenen Werbung nicht entrinnen kann durch Kanalwechsel oder Abschalten des Fernsehgeräts.

WO 2004/054259 A1 beschreibt einen Apparat und ein Verfahren, einen Zuschauer an einer Umschaltung des Kanals zu hindern, wenn auf diesem Kanal Werbung ausgegeben wird. Ein Werbesendungscontroller in einem Videowiedergabegerät verhindert zum einen, dass ein Zuschauer einer direkten, nicht aufgezeichneten Ausstrahlung eine Kanalumschaltung während einer Werbesendung vornimmt, und verhindert zum anderen, dass ein Zuschauer eines aufgezeichneten Programms das Programm im Schnellvorlauf abspielt, um enthaltene Werbesendungen auszulassen. Der Zuschauer kann entweder die Werbesendung ansehen oder eine Gebühr entrichten, um Kanalumschaltung oder Schnellvorlauf ausführen zu können, wenn Werbesendungen ausgestrahlt werden.

Es ist daher eine Aufgabe der Erfindung, ein Verfahren und eine Anordnung zum Speichern und Wiedergeben von TV-Sendungen anzugeben, welche das Überspringen von Werbung und anderen besonderen Inhalten verhindert.

Diese Aufgabe wird gelöst durch eine Anordnung zum Speichern und Wiedergeben von TV-Sendungen, welche folgendes aufweist:
- einen PVR Server mit Mitteln zum Empfang einer Vielzahl digital kodierter TV-Kanäle, Mitteln zum Versorgen einer Vielzahl von Endgeräten sowie Mitteln zum Aufzeichnen zu speichernder TV-Sendungen;
- zumindest ein Endgerät mit Mitteln zum Auswählen zu speichernder TV-Sendungen, Mitteln zum Übertragen der Auswahl an den PVR Server und Mitteln zum Wiedergeben von durch den PVR Server aufgezeichneten TV-Sendungen; und
- Mittel zum Detektieren besonderer Inhalte, die im Zusammenhang mit empfangenen TV-Sendungen stehen und Mittel zum Kennzeichnen dieser Inhalte in den Aufzeichnungen dieser TV-Sendungen.

Die Erfindung betrifft ferner ein Verfahren zum Speichern und Wiedergeben von TV-Sendungen, mit folgenden Schritten:
- Empfangen einer Vielzahl digital kodierter TV-Kanäle durch einen PVR Server, der eine Vielzahl von Endgeräten versorgt und zu speichernde TV-Sendungen aufzeichnet;
- Auswählen zu speichernder TV-Sendungen durch ein Endgerät und Übertragen der Auswahl an den PVR Server;
- Detektieren besonderer Inhalte, die im Zusammenhang mit empfangenen TV-Sendungen stehen und Kennzeichnen dieser Inhalte in den Aufzeichnungen dieser TV-Sendungen; und
- Wiedergeben von durch den PVR Server aufgezeichneter TV-Sendungen am Endgerät.

Die genannte Kennzeichnung kann dann im Datenstrom vom PVR Server zum Endgerät mitgeliefert werden, wobei beim Vorliegen der Kennzeichnung das Endgerät das Betätigen von Tasten mit einer Vorlauf- oder Sprungfunktion ignoriert, wenn ein gekennzeichneter Inhalt wiedergegeben wird oder ein Sprung zu einer Zeitmarke in der Aufzeichnung, die hinter einem gekennzeichneten Inhalt liegt, ausgeführt werden soll.

Alternativ kann vorgesehen werden, daß zum Erreichen eines möglichst einfachen Endgeräts und zum Ausschließen von Endgerätemanipulationen der PVR Server die durch die Betätigung von Tasten mit einer Vorlauf- oder Sprungfunktion erzeugten Befehlssequenzen ignoriert, wenn ein gekennzeichneter Inhalt wiedergegeben wird oder ein Sprung zu einer Zeitmarke in der Aufzeichnung, die hinter einem gekennzeichneten Inhalt liegt, ausgeführt werden soll.

Besondere Inhalte können beispielsweise sein: Werbung und andere Verbraucherinformationen in jeder Form, etwa Werbeblöcke innerhalb, vor und nach TV-Sendungen; Einblendungen von Produkten innerhalb von TV-Sendungen; redaktionelle Ankündigungen anderer TV-Sendungen, neuer Produkte/Dienstleistungen und ähnlichem, beispielsweise in Ratgebersendungen; usw.

Die genannte Kennzeichnung kann genutzt werden, um durch die im TV-Signal enthaltenen generischen besonderen Inhalte durch nutzerbezogene und/oder regionalisierte besondere Inhalte zu ersetzen, etwa generische Werbung durch nutzerbezogene. Diese nutzerbezogene Werbung kann dabei bei jeder Wiedergabe der zugrundeliegenden Aufzeichnung wechseln.

Es kann vorgesehen werden, daß am Endgerät die besonderen Inhalte einmal vollständig wiedergegeben werden müssen und anschließend die Vorlauf- oder Sprungfunktion auch für die besonderen Inhalte freigegeben wird.

Ferner kann die Erfindung genutzt werden, um innerhalb eines Werbeblocks (der als Ganzes nicht als besonderer Inhalt gekennzeichnet wird) einen oder mehrere Werbespots als besonderen Inhalt zu kennzeichnen, so daß das Überspringen bzw. der Schnellvorlauf für Werbung grundsätzlich möglich ist, jedoch die besonderen Spots (die entsprechend teurer vermarktet werden können) vom Überspringen und Schnellvorlauf ausgenommen und dem Nutzer zwangsweise präsentiert werden.

Schließlich kann vorgesehen werden, daß Nutzer, die bereit sind, hierfür ein gesondertes Entgelt zu entrichten, auch gekennzeichnete Inhalte grundsätzlich überspringen oder im Schnellvorlauf betrachten können.

Im folgenden werden bevorzugte Ausführungsbeispiele der vorliegenden Erfindung im Zusammenhang mit einer Zeichnung näher erläutert.

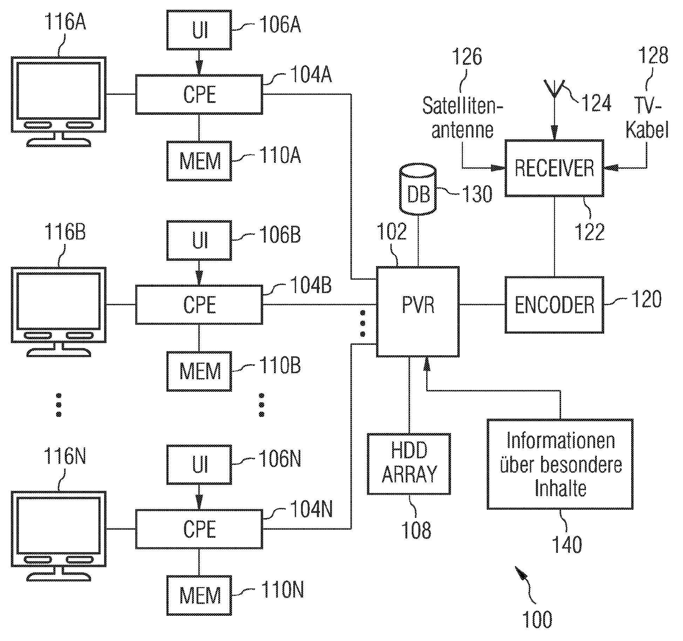

Die einzige Figur zeigt eine Anordnung 100 mit einem Netzwerk-PVR bzw. PVR Server 102 und von diesem versorgten Endgeräten 104A..104N. Der PVR Server 102 empfängt von einem Encoder 120 digital kodierte TV-Kanäle. Der Encoder wiederum empfängt die TV-Kanäle von einem Receiver 122, welcher über terrestrische Antenne 124 und/oder Satellitenantenne 126 und/oder TV-Kabel 128 geeignete TV-Signale empfängt. Der Encoder 120 und der Receiver 122 können dabei als ein Gerät konstruiert sein. Der Encoder 120 nutzt einen Codec wie etwa MPEG2 oder MPEG4 oder davon abgeleitete Codecs, um die zunächst in analoger Form vorliegenden TV-Signale in ein effizientes digitales Datenformat zu überführen. Liegt ein TV-Kanal bereits als digitaler Datenstrom vor, beispielsweise als Digital Video Broadcast DVB (terrestrisch als DVB-T, via Kabel als DVB-C oder via Satellit als DVB-S empfangen), kann der Encoder 120 diesen Datenstrom unmodifiziert an den PVR Server 102 weiterleiten oder vor Weiterleitung modifizieren, beispielsweise durch Anpassen der Bandbreite des Datenstroms an die Bandbreite der Verbindung zu den Endgeräten 104.

Der PVR Server 102 ist mit einem Massenspeicher 108 gekoppelt, beispielsweise mit einem Festplatten-Array bzw. HDD Array. In der Technik sind zahlreiche Methoden bekannt, aus Festplatten redundante Massenspeicher-Arrays aufzubauen, die beim Ausfall einzelner Festplatten dennoch die gespeicherten Daten vollständig ausliefern können. Der Einsatz eines solchen redundanten Arrays, z.B. eines redundanten Arrays aus unabhängigen Festplatten (RAID), ist im Zusammenhang mit der vorliegenden Erfindung von Vorteil, da ein PVR Server 102 und der angeschlossene Massenspeicher 108 sämtliche oder zumindest einen großen Anteil an den Daten der TV-Aufzeichnungen zahlreicher Nutzer speichert.

Die Nutzer-Endgeräte 104 sind mit dem PVR Server 102 beispielsweise über das TV-Kabelnetz oder über eine DSL-Verbindung verbunden. Moderne Codecs erlauben eine akzeptable Videoqualität mit Übertragungsraten ab wenigen hundert kbit/s. Mit den technisch über DSL-Verbindungen möglichen Bandbreiten von mehreren Mbit/s sind zwei oder mehr parallele Videoströme (für verschiedene Wiedergabegeräte im Haushalt des Nutzers) oder ein einzelner Videostrom mit hoher Qualität denkbar.

Die Endgeräte 104 können mit lokalem Speicher 110 ausgestattet oder gekoppelt sein, der beispielsweise als herkömmliche Festplatte und/oder als Flash-Speicher und/oder als RAM ausgebildet sein kann. Natürlich sind auch Sonderformen wie im Flash-Speicherkartenformat vorliegende Kleinstfestplatten denkbar. Flash-Speicher hat dabei den Vorteil, daß eine Speicherung der Daten unabhängig vom Anliegen einer Versorgungsspannung möglich ist und gleichzeitig besonders leise Endgeräte 104 ermöglicht werden, da Flash-Speicher keine rotierenden oder andere mechanische Teile aufweist.

Der Speicher 110 kann dabei fest mit dem Endgerät 104 gekoppelt oder auswechselbar gestaltet sein. An den Speicher 110 der Endgeräte 104 bestehen geringere Anforderungen als an den Massenspeicher 108 hinsichtlich Redundanz und Ausfallsicherheit. Der Endgeräte-Speicher 110 kann dazu dienen, Nutzerpräferenzen und andere Einstellungen zu speichern, sofern diese nicht zentral durch den PVR Server 102 verwaltet werden.

Bei dem Endgerät bzw. CPE 104 kann es sich um eine Set-Top-Box handeln, die an ein Bildwiedergabegerät 116 angeschlossen wird. Alternativ kann das Endgerät 104 in das Bildwiedergabegerät 116 integriert sein. Das Bildwiedergabegerät 116 kann ein herkömmlicher Fernseher sein. Alternativ kann es sich um einen Monitor handeln, der selbst keinen TV-Tuner aufweist. Das Endgerät 104 weist eine Benutzerschnittstelle 106 auf, die dem Nutzer beispielsweise dazu dient, sein Archiv aufgezeichneter TV-Sendungen, ggf. sein persönliches TV-Programm und andere persönliche Einstellungen zu verwalten. Diese Benutzerschnittstelle kann, wie auf dem Gebiet der Set-Top-Boxen üblich, so realisiert sein, daß der Nutzer Eingaben über eine Fernbedienung macht und Ausgaben über das Bildwiedergabegerät 116 angezeigt bekommt.

Die Eingaben eines Nutzers betreffend die Aufzeichnung von TV-Sendungen werden an den PVR Server 102 gesendet, der aus den empfangenen Daten Datensätze erzeugt, welche die aufzuzeichnende TV-Sendung(en) kennzeichnen. Mittels eines Schedulers wird die entsprechende TV-Sendung zur Aufnahme vorgesehen. Eine Datenbank 130, beispielsweise eine Nutzerdatenbank, verwaltet die von einem Nutzer zur Aufnahme vorgesehenen Sendungen und prüft Berechtigungen des Nutzers, etwa ob der Nutzer den entsprechenden TV-Kanal abonniert hat.

Wird eine TV-Sendung ausgestrahlt, prüft der PVR Server 102 in Zusammenwirken mit der Datenbank 130, ob ein (es genügt ein einziger) Nutzer diese Sendung zur Aufnahme vorgesehen hat. Ist dies der Fall, wird die Aufnahme vorgenommen. Dabei können die bei der Aufzeichnung anfallenden Daten vollständig im Speicher 108 des PVR Servers abgelegt werden oder in einen lokalen und einen zentralen Teil aufgeteilt und entsprechend im Speicher 110 des Endgeräts 104 oder im Massenspeicher 108 abgelegt werden. Falls an mehreren Endgeräten 104 die Sendung zur Aufnahme programmiert wurde, kann entweder eine gemeinsame Kopie vorgesehen werden, die vollständig bzw. deren zentraler Anteil im Speicher 108 des PVR Servers 102 abgelegt wird, oder für jedes Endgerät wird eine gesonderte Kopie erstellt. In der ersten Datenbank 130 wird anschließend für jedes Endgerät, welches die Sendung zur Aufzeichnung vorgesehen hatte, eine Adressierungsinformation auf die gemeinsame oder die separate Kopie hinterlegt, etwa ein Dateiname oder sonstige Indexinformationen. Ein solcher nutzerbezogener Eintrag kann in Form von Metadaten weitere Informationen zur Sendung enthalten, etwa ein Verfallsdatum oder die Positionen etwaiger Werbeblöcke oder anderer besonderer Inhalte, um das Überspringen derselben zu verhindern, wie weiter unten mit weiteren Details erläutert.

Falls eine Aufteilung in zentrale und lokale Aufzeichnungsdaten erfolgt, werden die lokalen Daten entsprechend an alle Endgeräte 104 gesendet, an welchen die Sendung in das persönliche TV-Programm aufgenommen werden soll. Das Aufteilen der Daten kann dabei so erfolgen, daß zumindest der zentrale Datenstrom für sich genommen kein dekodierbares Videosignal (Bild und Ton) mehr liefert. Erst wenn beide Datenmengen (aus dem Speicher 110 eines Endgeräts 104 und dem Massenspeicher 108) kombiniert werden, kann die Sendung vollständig wiedergegeben werden.

Eine Wiedergabe erfolgt, indem ein Nutzer mittels Nutzerschnittstelle 106 am Endgerät 104 das Archiv verfügbarer Sendungen anfordert, welches von der Datenbank 130 an das Endgerät 104 zur Darstellung mittels der Nutzerschnittstelle, beispielsweise auf dem Bildschirm 116, gesendet wird. Aus dem Archiv kann der Nutzer eine Aufzeichnung auswählen und durch entsprechende Eingabe die Wiedergabe starten. Das Endgerät sendet diese Anforderung an den PVR Server 102, welcher mittels der Datenbank 130 die entsprechenden Video-Daten im Speicher 108 lokalisiert und diese als Video-Stream an das entsprechende Endgerät 104 sendet.

Falls eine Aufteilung in zentrale und lokale Aufzeichnungsdaten vorliegt, können die im Speicher 110 des auswählenden Endgeräts 104 und die im Massenspeicher 108 abgelegten Teile der Aufzeichnung im PVR Server 102 kombiniert werden. Hierzu werden zunächst die im Endgerät gespeicherten Daten an den PVR Server übertragen und dort kombiniert. Anschließend werden die komplettierten Videodaten zur Wiedergabe als Echtzeitdatenstrom an das Endgerät 104 gesendet.

Alternativ können die im Speicher 110 des auswählenden Endgeräts 104 und die im Massenspeicher 108 abgelegten Teile der Aufzeichnung in Echtzeit im Endgerät 104 kombiniert werden. Auf entsprechende Nutzereingabe hin werden die unvollständigen Videodaten mittels des PVR Servers 102 aus dem Massenspeicher 108 als Nahe-Echtzeitdatenstrom an das Endgerät 104 gesendet, dort um die im Endgerät 104 gespeicherten Daten ergänzt und wiedergegeben. Nahe-Echtzeitdatenstrom bedeutet dabei, daß je nach Art der gewählten Aufteilung der Daten zwischen lokalem Speicher 110 und Massenspeicher 108 sich auch größere Datenmengen im lokalen Speicher befinden können, etwa Intro-Sequenzen, die zunächst abgespielt werden, bevor die bis dahin gegebenenfalls gepufferten Daten aus dem Massenspeicher 108 zur Wiedergabe aufbereitet werden.

Sendungen bestimmter Kanäle werden mit Werbung oder anderweitigen besonderen Inhalten ausgestrahlt, bei denen der Betreiber des TV-Kanals ein Interesse daran hat, daß Nutzer von Endgeräten 104 diese Werbung oder besonderen Inhalte abspielen und nicht die Überspringen- oder Schnellvorlauffunktion "ihres" Netzwerk-PVR nutzen. Diese Inhalte werden durch den PVR Server 102 gemeinsam mit der TV-Sendung aufgezeichnet, in die diese Inhalte eingebettet sind oder mit der sie anderweitig in Zusammenhang stehen, etwa Werbung oder Copyright-Hinweise vor oder nach der TV-Sendung.

Durch die vorliegende Erfindung werden solche besonderen Inhalte detektiert und in der Menge der aufgezeichneten Daten gesondert gekennzeichnet. Die Detektierung kann erfolgen, indem ein in das TV-Signal eingebettetes Signal vom Receiver 122 detektiert wird, wobei die Kennzeichnung dann erfolgt, indem der Receiver 122 den Encoder 120 und/oder den PVR Server 102 veranlaßt, eine entsprechende Kennzeichnung der digitalen Aufzeichnungsdaten vorzunehmen. Ein verbreitetes Signal, welches sich für diesen Zweck nutzen läßt, ist das VPS-Signal. Diese Art der Detektierung und Kennzeichnung hat allerdings den Nachteil, daß das in das TV-Signal eingebettete Signal generell im ausgestrahlten Signal enthalten ist und durch Nutzer frei programmierbarer Standalone-PVR oder HTPC-Lösungen genutzt werden könnte, um - entgegen der Absichten des Betreibers des TV-Kanals - die eigens gekennzeichneten besonderen Inhalte herauszufiltern.

In einer Alternative ist daher vorgesehen, die Informationen über besondere Inhalte 140 getrennt von den eigentlichen TV-Signalen dem PVR Server 102 oder dem Encoder 120 zuzuführen, beispielsweise mittels des Internet. Dabei können diese Informationen 140 durch die Sendeanstalt zur Verfügung gestellt werden, beispielsweise indem besondere Inhalte durch eine Anfangs- und eine Endzeit charakterisiert werden und die Anfangs- und Endzeit zeitgleich mit der Ausstrahlung der gesonderten Inhalte an PVR Server 102 oder Encoder 120 gesendet, dort detektiert und zur Kennzeichnung der Inhalte verwendet werden. Natürlich ist es auch möglich, diese Informationen vorab oder nachträglich an PVR Server 102 oder Encoder 120 zu senden.

Dabei ist von Vorteil, daß die Kontrolle über die gespeicherten Aufzeichnungen und die assoziierten Informationen über besondere Inhalte allein durch den Betreiber des PVR Servers ausgeübt werden kann, wodurch eine Nutzung der durch Sendeanstalten zur Verfügung gestellten, sensiblen Daten zu Zwecken der Vermeidung von Werbung ausgeschlossen werden kann.

Eine weitere Art der Detektierung besteht darin, besondere Merkmale der empfangenen TV-Signale auszuwerten, etwa sich abrupt ändernde Lautstärkepegel, Bildhelligkeiten, Farben, Sättigung, Bildformatänderungen, Änderungen in der Audio-Kodierung, z.B. Mehrkanalton 5.1 nach Stereoton 2.0 o.ä., da Werbung häufig in mehreren dieser Merkmale von der umgebenden Sendung abweicht. Wiederum kann ansprechend auf eine derartige Detektierung der Inhalt entsprechend markiert werden, wobei eine gewisse Unschärfe in die eigentliche Sendung hinein (d.h. zu frühe Kennzeichnung und/oder zu lange andauernde Kennzeichnung) unschädlich ist, da der Nutzer die eigentliche Sendung ohnehin voraussichtlich nicht überspringen oder im Schnellvorlauf ablaufen lassen will.

Schließlich ist es natürlich auch möglich, durch Angestellte alle Kanäle überwachen zu lassen und die Werbung oder andere besondere Inhalte durch Angestellte ermitteln zu lassen. In diesem Fall werden entsprechende Informationen über besondere Inhalte 140 über Internet oder proprietäre Schnittstellen an PVR Server 102 oder Encoder 120 geliefert, dort detektiert und zur Kennzeichnung der aufgezeichneten Daten genutzt.

Wie bereits erwähnt kann die Detektierung und Kennzeichnung von Werbeblöcken oder besonderen Inhalten auch genutzt werden, die in der Aufzeichnung vorliegenden Werbungen oder besonderen Inhalte durch andere besondere Inhalte zu ersetzen, etwa andere Werbungen. Dies ist beispielsweise nützlich, um generische Werbung durch nutzerspezifische Werbung zu ersetzen. Hierfür kann ferner vorgesehen sein, daß der Betreiber des Netzwerk-PVR 102 - wenn erforderlich, mit Zustimmung des jeweiligen Nutzers - eine Auswertung des Nutzerverhaltens vornimmt. Zur Ermittlung des Nutzerverhaltens können beispielsweise automatisiert ausgewertet werden:
- Genre von Filmen, Sachgebiete von Reportagen und Dokumentationen, die in einem persönlichen Programm oder dem Archiv eines Nutzers enthalten sind,
- vom Nutzer gemachte Angaben zu Interessen und Neigungen,
- Umschalte-, Vor- und Rückspulvorgänge des Nutzers beim Betrachten der aufgezeichneten Inhalte, und/oder
- bislang konsumierte Video on Demand Angebote.

Statt nutzerspezifischer Werbung kann auch regionale Werbung anstelle der generischen Werbung eingeblendet werden.

Die Detektierung und Kennzeichnung besonderer Inhalte kann ferner auch genutzt werden, nicht aktuelle Werbungen in archivierten Sendungen durch aktuelle Werbungen zu ersetzen. Im allgemeinen können so auch veraltete Sendungsbestandteile durch aktualisierte ersetzt werden, wobei auch die Ersetzung durch Inhalte der Länge Null denkbar sind, d.h. die Löschung bestimmter Inhalte. Dies ist beispielsweise hilfreich in Sendungen, in denen beispielsweise zum Anrufen einer Telefonnummer aufgerufen wird, die aber nur während der Originalausstrahlung geschaltet ist. Werden entsprechende Sequenzen der Sendung als besondere Inhalte markiert und durch neue besondere Inhalte (z.B. der Länge Null) ersetzt, werden dem Nutzer keine veralteten Telefonnummern angesagt oder angezeigt.

Es kann vorgesehen werden, für Nutzer, die ein entsprechendes gesondertes Entgelt entrichten, die Restriktionen bezüglich Überspringen und/oder Schnellvorlauf zu lockern oder aufzuheben. Ferner ist es möglich, für alle oder ausgewählte Nutzer die Restriktionen bezüglich Überspringen und/oder Schnellvorlauf nur während des ersten Betrachtens der besonderen Inhalte aufrechtzuerhalten und anschließend Überspringen und/oder Schnellvorlauf auch für die besonderen Inhalte zuzulassen. Die Information, daß eine spezielle Werbung bereits einem Nutzer angezeigt wurde, kann in der Datenbank 130 verwaltet werden.

Dem Inhalteanbieter steht es frei, anstelle des gesamten Werbeblocks nur ausgewählte Werbungen den genannten Nutzerrestriktionen zu unterwerfen. Dies kann kombiniert werden mit eventuell vorhandenen Nutzerprofilen, so daß Nutzer die für sie ohnehin irrelevante generische Werbung überspringen können, nicht jedoch die für sie relevanten generischen Werbespots.

Es ist selbstverständlich, daß die genannten Restriktionen auch für Sonderformen des Überspringens oder Schnellvorlaufs von Inhalten wie das zeitversetzte Fernsehen (Time Shift) durch den PVR Server durchgesetzt werden können.

Die Erfindung kann auf verschiedene Weise geschäftlich genutzt werden. Beispielsweise kann ein Inhalteanbieter Werbeplätze, die als nicht überspringbar gekennzeichnet sind, teurer vermarkten als reguläre Werbeplätze. Durch Kombination mit Nutzerprofilen sinkt der Anteil irrelevanter Werbung für den Nutzer, der einerseits die Werbung deswegen als weniger störend empfindet und überdies auch - wegen des Wegfalls der irrelevanten Werbung - insgesamt weniger Werbung präsentiert bekommt. Wird die generische Werbung insgesamt durch nutzerspezifische oder regionale Werbung ersetzt, kann vorgesehen werden, daß die - im Vergleich zur generischen Werbung - höheren Einnahmen durch gezieltere Werbung zwischen den Sendeanstalten (deren Werbung substituiert wird und die dadurch keine Einnahmen generieren können), dem Anbieter der nutzerspezifischen/regionalen Werbung und dem Betreiber des Netzwerk-PVR aufgeteilt werden.

Es kann auch vorgesehen werden, Nutzern, die bereit sind, ein Nutzerprofil zur Verfügung zu stellen, etwa im Wege einer geringeren monatlichen Grundgebühr o.ä. einen Bruchteil der durch die gezieltere Werbung erwirtschafteten höheren Einnahmen zu erstatten.

## Patentansprüche

1. Anordnung (100) zum Speichern und Wiedergeben von TV-Sendungen, welche folgendes aufweist:
- einen PVR Server (102) mit Mitteln zum Empfang einer Vielzahl digital kodierter TV-Kanäle, Mitteln zum Versorgen einer Vielzahl von Endgeräten (104) sowie Mitteln zum Aufzeichnen zu speichernder TV-Sendungen und Mitteln zum Kennzeichnen besonderer Inhalte, die im Zusammenhang mit empfangenen TV-Sendungen stehen, in den Aufzeichnungen dieser TV-Sendungen;
- zumindest ein Endgerät (104) mit Mitteln zum Auswählen zu speichernder TV-Sendungen (106), Mitteln zum Übertragen der Auswahl an den PVR Server (102) und Mitteln zum Wiedergeben von durch den PVR Server (102) aufgezeichneten TV-Sendungen;
- Mittel zum Detektieren der besonderen Inhalte, die im Zusammenhang mit empfangenen TV-Sendungen stehen; und
- Mittel, die im Zusammenwirken mit dem PVR Server (102) Anforderungen zum Überspringen der besonderen Inhalte bei der Wiedergabe der Aufzeichnung einer mit den besonderen Inhalten im Zusammenhang stehenden TV-Sendung am Endgerät (104) verhindern,
wobei der PVR Server (102) die durch die Betätigung der Tasten mit der Sprungfunktion erzeugten Befehlssequenzen ignoriert, wenn ein Sprung zu einer Zeitmarke in der Aufzeichnung, die hinter einem gekennzeichneten Inhalt liegt, ausgeführt werden soll,
wobei die Mittel zum Verhindern des Überspringens besonderer Inhalte so ausgestaltet sind, daß das Überspringen besonderer Inhalte nur bei deren erster Wiedergabe verhindert wird.

2. Anordnung nach Anspruch 1, wobei die Detektierung erfolgt, indem ein in ein TV-Signal eingebettetes Signal von einem Receiver (122) detektiert wird.

3. Anordnung nach Anspruch 1, wobei die Detektierung darin besteht, besondere Merkmale empfangener TV-Signale auszuwerten.

4. Anordnung nach Anspruch 1, wobei vorgesehen ist, Informationen über die besonderen Inhalte (140) getrennt von eigentlichen TV-Signalen dem PVR Server (102) oder einem Encoder (120) zuzuführen, und wobei die Informationen über die besonderen Inhalte (140) durch eine Sendeanstalt zur Verfügung gestellt werden, indem die besonderen Inhalte durch eine Anfangs- und eine Endzeit charakterisiert werden und die Anfangs- und Endzeit zeitgleich mit einer Ausstrahlung der besonderen Inhalte, vorab oder nachträglich an den PVR Server (102) oder den Encoder (120) gesendet, dort detektiert und zur Kennzeichnung der besonderen Inhalte verwendet werden.

5. Anordnung nach einem der vorhergehenden Ansprüche, bei der die Mittel zum Verhindern des Überspringens besonderer Inhalte so ausgestaltet sind, daß am Endgerät (104) die besonderen Inhalte einmal vollständig wiedergegeben werden müssen und anschließend die Sprungfunktion auch für die besonderen Inhalte freigegeben wird.

6. Anordnung nach einem der vorhergehenden Ansprüche, wobei die Anordnung dazu eingerichtet ist, innerhalb eines Werbeblocks einen oder mehrere Werbespots in Kombination mit vorhandenen Nutzerprofilen als besonderen Inhalt zu kennzeichnen, so daß Nutzer für sie irrelevante Werbespots überspringen können, nicht jedoch für sie relevante Werbespots.

7. Anordnung nach einem der vorhergehenden Ansprüche, wobei die als besonderer Inhalt gekennzeichneten Inhalte nach Entrichtung eines gesonderten Entgelts überspringbar sind.

8. Verfahren zum Speichern und Wiedergeben von TV-Sendungen, mit folgenden Schritten:
- Empfangen einer Vielzahl digital kodierter TV-Kanäle durch einen PVR Server (102), der eine Vielzahl von Endgeräten (104) versorgt und zu speichernde TV-Sendungen aufzeichnet;
- Auswählen zu speichernder TV-Sendungen durch ein Endgerät (104) und Übertragen der Auswahl an den PVR Server (102);
- Detektieren besonderer Inhalte, die im Zusammenhang mit empfangenen TV-Sendungen stehen,
- Kennzeichnen dieser Inhalte in den Aufzeichnungen dieser TV-Sendungen durch den PVR Server (102); und
- Wiedergeben von durch den PVR Server (102) aufgezeichneter TV-Sendungen am Endgerät (104),
- wobei im Zusammenwirken mit dem PVR Server (102) Anforderungen zum Überspringen der besonderen Inhalte bei der Wiedergabe der Aufzeichnung einer mit den besonderen Inhalten im Zusammenhang stehenden TV-Sendung am Endgerät (104) verhindert werden, wobei, wenn ein Sprung zu einer Zeitmarke in der Aufzeichnung, die hinter einem gekennzeichneten Inhalt liegt, ausgeführt werden soll, der PVR Server (102) die durch die Betätigung der Tasten mit einer Sprungfunktion erzeugten Befehlssequenzen ignoriert
- wobei das Überspringen besonderer Inhalte nur bei deren erster Wiedergabe verhindert wird.

9. Verfahren nach Anspruch 8, wobei die Detektierung erfolgt, indem ein in ein TV-Signal eingebettetes Signal von einem Receiver (122) detektiert wird.

10. Verfahren nach Anspruch 8, wobei die Detektierung darin besteht, besondere Merkmale empfangener TV-Signale auszuwerten.

11. Verfahren nach Anspruch 8, wobei Informationen über die besonderen Inhalte (140) getrennt von eigentlichen TV-Signalen dem PVR Server (102) oder einem Encoder (120) zugeführt werden, und wobei die Informationen über die besonderen Inhalte (140) durch eine Sendeanstalt zur Verfügung gestellt werden, indem die besonderen Inhalte durch eine Anfangs- und eine Endzeit charakterisiert werden und die Anfangs- und Endzeit zeitgleich mit einer Ausstrahlung der besonderen Inhalte, vorab oder nachträglich an den PVR Server (102) oder den Encoder (120) gesendet, dort detektiert und zur Kennzeichnung der besonderen Inhalte verwendet werden.

12. Verfahren nach einem der Ansprüche 8 bis 11, bei dem am Endgerät (104) die besonderen Inhalte einmal vollständig wiedergegeben werden müssen und anschließend die Sprungfunktion auch für die besonderen Inhalte freigegeben wird.

13. Verfahren nach einem der Ansprüche 8 bis 12, bei dem innerhalb eines Werbeblocks ein oder mehrere Werbespots in Kombination mit vorhandenen Nutzerprofilen als besonderer Inhalt gekennzeichnet werden, so daß Nutzer für sie irrelevante Werbespots überspringen können, nicht jedoch für sie relevante Werbespots.

14. Verfahren nach einem der Ansprüche 8 bis 13, bei dem die als besonderer Inhalt gekennzeichneten Inhalte nach Entrichtung eines gesonderten Entgelts übersprungen werden können.

## Claims

1. Arrangement (100) for storing and playing back TV programmes, having:
- a PVR server (102) with means for receiving a multiplicity of digitally coded TV channels, means for supplying a multiplicity of terminals (104) and means for recording TV programmes to be stored and means for marking special contents related to received TV programmes in the recordings of these TV programmes;
- at least one terminal (104) with means for selecting TV programmes (106) to be stored, means for transmitting the selection to the PVR server (102) and means for playing back TV programmes recorded by the PVR server (102);
- means for detecting the special contents related to received TV programmes; and
- means which, in interaction with the PVR server (102), prevent requests to skip the special contents when playing back the recording of a TV programme related to the special contents on the terminal (104),
the PVR server (102) ignoring the command sequences generated by the actuation of the buttons with the skip function if the intention is to skip to a time marker in the recording which is after marked contents,
the means for preventing the skipping of special contents being configured in such a manner that the skipping of special contents is prevented only when they are played back for the first time.

2. Arrangement according to Claim 1, the detection being carried out by virtue of a receiver (122) detecting a signal embedded in a TV signal.

3. Arrangement according to Claim 1, the detection involving evaluating special features of received TV signals.

4. Arrangement according to Claim 1, provision being made for information relating to the special contents (140) to be supplied to the PVR server (102) or to an encoder (120) in a manner separate from actual TV signals, and the information relating to the special contents (140) being provided by a broadcasting company by virtue of the special contents being **characterized by** a start time and an end time and the start and end times being transmitted to the PVR server (102) or to the encoder (120) at the same time as, before or after broadcasting of the special contents, being detected there and being used to mark the special contents.

5. Arrangement according to one of the preceding claims, in which the means for preventing the skipping of special contents are configured in such a manner that the special contents have to be played back in full once on the terminal (104) and the skip function is then also enabled for the special contents.

6. Arrangement according to one of the preceding claims, the arrangement being set up to mark one or more advertising commercials inside an advertising block in combination with existing user profiles as special contents, with the result that users can skip advertising commercials irrelevant to them but cannot skip advertising commercials relevant to them.

7. Arrangement according to one of the preceding claims, the contents marked as special contents being able to be skipped after paying a separate fee.

8. Method for storing and playing back TV programmes, having the following steps:
- receiving a multiplicity of digitally coded TV channels by means of a PVR server (102) which supplies a multiplicity of terminals (104) and records TV programmes to be stored;
- selecting TV programmes to be stored by means of a terminal (104) and transmitting the selection to the PVR server (102);
- detecting special contents related to received TV programmes,
- marking these contents in the recordings of these TV programmes by means of the PVR server (102); and
- playing back TV programmes recorded by the PVR server (102) on the terminal (104),
- in which case, in interaction with the PVR server (102), requests to skip the special contents are prevented when playing back the recording of a TV programme related to the special contents on the terminal (104),
in which case, if the intention is to skip to a time marker in the recording after marked contents, the PVR server (102) ignores the command sequences generated by the actuation of the buttons with a skip function,
- the skipping of special contents being prevented only when they are played back for the first time.

9. Method according to Claim 8, the detection being carried out by virtue of a receiver (122) detecting a signal embedded in a TV signal.

10. Method according to Claim 8, the detection involving evaluating special features of received TV signals.

11. Method according to Claim 8, information relating to the special contents (140) being supplied to the PVR server (102) or to an encoder (120) in a manner separate from actual TV signals, and the information relating to the special contents (140) being provided by a broadcasting company by virtue of the special contents being **characterized by** a start time and an end time and the start and end times being transmitted to the PVR server (102) or to the encoder (120) at the same time as, before or after broadcasting of the special contents, being detected there and being used to mark the special contents.

12. Method according to one of Claims 8 to 11, in which the special contents have to be played back in full once on the terminal (104) and the skip function is then also enabled for the special contents.

13. Method according to one of Claims 8 to 12, in which one or more advertising commercials within an advertising block in combination with existing user profiles are marked as special contents, with the result that users can skip advertising commercials irrelevant to them but cannot skip advertising commercials relevant to them.

14. Method according to one of Claims 8 to 13, in which the contents marked as special contents can be skipped after paying a separate fee.

## Revendications

1. Système (100) pour stocker et reproduire des émissions TV, qui comprend les points suivants:
- un serveur PVR (102) avec des moyens pour recevoir une multiplicité de canaux TV à codage numérique, des moyens pour alimenter une multiplicité d'appareils terminaux (104) ainsi que des moyens pour enregistrer des émissions TV à stocker et des moyens pour identifier des contenus particuliers, qui sont en relation avec des émissions TV reçues, dans les enregistrements de ces émissions TV;
- au moins un appareil terminal (104) avec des moyens pour sélectionner des émissions TV à stocker (106), des moyens pour transmettre la sélection au serveur PVR (102) et des moyens pour reproduire des émissions TV enregistrées par le serveur PVR (102);
- des moyens pour détecter les contenus particuliers, qui sont en relation avec des émissions TV reçues; et
- des moyens qui, en coopération avec le serveur PVR (102), empêchent des demandes de sauter les contenus particuliers lors de la reproduction de l'enregistrement d'une émission TV se trouvant en relation avec les contenus particuliers à l'appareil terminal (104),
dans lequel le serveur PVR (102) ignore la séquence d'instructions produite par l'actionnement des touches avec la fonction de saut, lorsqu'un saut doit être exécuté à une marque temporelle dans l'enregistrement, qui se trouve derrière un contenu identifié,
dans lequel les moyens pour empêcher de sauter des contenus particuliers sont configurés de façon à empêcher le saut de contenus particuliers uniquement lors de leur première reproduction.

2. Système selon la revendication 1, dans lequel on effectue la détection en détectant, au moyen d'un récepteur (122), un signal noyé dans un signal TV.

3. Système selon la revendication 1, dans lequel la détection consiste à évaluer des caractéristiques particulières de signaux TV reçus.

4. Système selon la revendication 1, dans lequel il est prévu de fournir des informations sur les contenus particuliers (140) séparément des signaux TV proprement dits au serveur PVR (102) ou à un encodeur (120), et dans lequel les informations sur les contenus particuliers (140) sont mises à disposition par un établissement d'émission, par le fait que les contenus particuliers sont **caractérisés par** un instant de début et un instant de fin et que l'instant de début et l'instant de fin sont envoyés avant ou après au serveur PVR (102) ou à l'encodeur (120), en même temps qu'une émission des contenus particuliers, où ils sont détectés et utilisés pour l'identification des contenus particuliers.

5. Système selon l'une quelconque des revendications précédentes, dans lequel les moyens pour empêcher de sauter des contenus particuliers sont configurés de telle manière que les contenus particuliers doivent être reproduits entièrement une fois à l'appareil terminal (104) et qu'ensuite la fonction de saut soit libérée aussi pour les contenus particuliers.

6. Système selon l'une quelconque des revendications précédentes, dans lequel le système est conçu pour identifier comme contenu particulier, à l'intérieur d'un bloc publicitaire, un ou plusieurs messages publicitaires en combinaison avec des profils d'utilisateurs présents, de telle manière que des utilisateurs puissent sauter des messages publicitaires sans intérêt pour eux, mais pas des messages publicitaires qui les intéressent.

7. Système selon l'une quelconque des revendications précédentes, dans lequel les contenus identifiés comme contenu particulier peuvent être sautés après paiement d'une cotisation distincte.

8. Procédé pour stocker et reproduire des émissions TV, comprenant les étapes suivantes:
- réception d'une multiplicité de canaux TV à codage numérique par un serveur PVR (102), qui alimente une multiplicité d'appareils terminaux (104) et qui enregistre des émissions TV à stocker;
- sélection d'émissions TV à stocker par un appareil terminal (104) et transmission de la sélection au serveur PVR (102);
- détection de contenus particuliers, qui sont en relation avec des émissions TV reçues;
- identification de ces contenus dans les enregistrements de ces émissions TV par le serveur PVR (102); et
- reproduction d'émissions TV enregistrées par le serveur PVR (102) à l'appareil terminal (104),
dans lequel on empêche, en coopération avec le serveur PVR (102), des demandes de sauter les contenus particuliers lors de la reproduction de l'enregistrement d'une émission TV se trouvant en relation avec les contenus particuliers à l'appareil terminal (104),
dans lequel, lorsqu'un saut doit être exécuté à une marque temporelle dans l'enregistrement, qui est située derrière un contenu identifié, le serveur PVR (102) ignore la séquence d'instructions produite par l'actionnement des touches avec une fonction de saut,
dans lequel on empêche le saut de contenus particuliers uniquement lors de leur première reproduction.

9. Procédé selon la revendication 8, dans lequel on effectue la détection en détectant au moyen d'un récepteur (122) un signal noyé dans un signal TV.

10. Procédé selon la revendication 8, dans lequel la détection consiste à évaluer des caractéristiques particulières de signaux TV reçus.

11. Procédé selon la revendication 8, dans lequel on fournit des informations sur les contenus particuliers (140) séparément des signaux TV proprement dits au serveur PVR (102) ou à un encodeur (120), et dans lequel les informations sur les contenus particuliers (140) sont mises à disposition par un établissement d'émission, par le fait que les contenus particuliers sont **caractérisés par** un instant de début et un instant de fin et que l'instant de début et l'instant de fin sont envoyés avant ou après au serveur PVR (102) ou à l'encodeur (120), en même temps qu'une émission des contenus particuliers, où ils sont détectés et utilisés pour l'identification des contenus particuliers.

12. Procédé selon l'une quelconque des revendications 8 à 11, dans lequel les contenus particuliers doivent être reproduits entièrement une fois à l'appareil terminal (104) et la fonction de saut est ensuite libérée aussi pour les contenus particuliers.

13. Procédé selon l'une quelconque des revendications 8 à 12, dans lequel on identifie comme contenu particulier, à l'intérieur d'un bloc publicitaire, un ou plusieurs messages publicitaires en combinaison avec des profils d'utilisateurs présents, de telle manière que des utilisateurs puissent sauter des messages publicitaires sans intérêt pour eux mais pas des messages publicitaires qui les intéressent.

14. Procédé selon l'une quelconque des revendications 8 à 13, dans lequel les contenus identifiés comme contenu particulier peuvent être sautés après paiement d'une cotisation distincte.
